(19) Europäisches Patentamt / European Patent Office / Office européen des brevets

(11) **EP 2 277 747 B1**

(12) **EUROPÄISCHE PATENTSCHRIFT**

(45) Veröffentlichungstag und Bekanntmachung des Hinweises auf die Patenterteilung:
**09.05.2012   Patentblatt 2012/19**

(51) Int Cl.:
***B60R 22/28*** *(2006.01)*          *B60R 22/18* *(2006.01)*

(21) Anmeldenummer: **10182059.5**

(22) Anmeldetag: **12.02.2008**

(54) **Schlossumlenkeinrichtung**

Buckle device

Dispositif de verrouillage à renvoi

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.02.2007   DE 102007007702**
**28.09.2007   DE 102007047549**

(43) Veröffentlichungstag der Anmeldung:
**26.01.2011   Patentblatt 2011/04**

(62) Dokumentnummer(n) der früheren Anmeldung(en) nach Art. 76 EPÜ:
**08708922.3 / 2 137 032**

(73) Patentinhaber: **TAKATA - PETRI AG**
**63743 Aschaffenburg (DE)**

(72) Erfinder:
• **Wendt, Mario**
  **14473 Potsdam (DE)**
• **Vidolov, Kliment**
  **10787 Berlin (DE)**

(74) Vertreter: **Müller, Wolfram Hubertus et al**
**Patentanwälte**
**Maikowski & Ninnemann**
**Postfach 15 09 20**
**10671 Berlin (DE)**

(56) Entgegenhaltungen:
**DE-A1- 10 210 781      DE-C1- 3 233 797**
**DE-U1- 20 303 549      GB-A- 2 349 615**

**Beschreibung**

Die Erfindung betrifft eine Schlossumlenkeinrichtung für ein Kraftfahrzeug, mit einer Schlosszunge zum Einstecken in eine Schlossschnalle und einem mit der Schlosszunge gekoppelten Umlenkkörper, der dazu ausgebildet ist, einen Sicherheitsgurt in ein Schultersegment und ein Beckensegment zu unterteilen und derart umzulenken, dass die beiden Segmente in unterschiedlichen Richtungen vom Umlenkkörper abgehen. Eine solche Schlossumlenkreinrichtung ist aus der gattungsgemäßen DE 32 33 797 C1 bekannt.

Der Erfindung liegt das Problem zugrunde, eine verbesserte Schlossumlenkeinrichtung bereitzustellen.

Dieses Problem wird durch eine Schlossumlenkeinrichtung mit den Merkmalen des Anspruchs 1 gelöst.

Danach ist vorgesehen, dass zumindest ein vom Umlenkkörper abragender Steg vorgesehen ist, mit einer dem Umlenkkörper abgewandten Oberfläche, die die erste Anlagefläche bildet, wobei der Steg am Umlenkkörper quer zur Erstreckungsrichtung ringförmig umläuft, oder wobei der Steg spiralförmig am Umlenkkörper umläuft, so dass die erste Anlagefläche erste Abschnitte und zweite Abschnitte aufweist, wobei die ersten Abschnitte entlang derjenigen Richtung orientiert sind, entlang der das Schultersegment vom Umlenkkörper abgeht, und wobei die zweiten Abschnitte entlang derjenigen Richtung orientiert sind, entlang der das Beckensegment vom Umlenkkörper abgeht.

Der Umlenkkörper erstreckt sich entlang einer Erstreckungsrichtung. Bei einem Umlenkkörper in Form einer Rolle verläuft jene Erstreckungsrichtung parallel zur Rotationsachse (Zylinderachse) des rollenförmigen Umlenkkörpers. Ein freier Endabschnitt des Umlenkkörpers ist vorzugsweise über einen mittleren Abschnitt des Umlenkkörpers mit einem weiteren freien Endabschnitt des Umlenkkörpers verbunden, der dem anderen Endabschnitt des Umlenkkörpers entlang der Erstreckungsrichtung des Umlenkkörpers gegenüber liegt. Die drei Abschnitte sind vorzugsweise einstückig aneinander angeformt.

Die beiden Endabschnitte und der mittlere Abschnitt weisen je eine Querschnittsfläche auf, wobei die Querschnittsflächen der Endabschnitte vorzugsweise deckungsgleich ausgebildet sind, und wobei die beiden Endabschnitte und der mittlere Abschnitt entlang der Erstreckungsrichtung vorzugsweise einen konstanten Querschnitt aufweisen, und zwar sowohl hinsichtlich der Querschnittskontur als auch hinsichtlich der Querschnittsfläche.

Vorzugsweise sind die Querschnittsflächen der Endabschnitte des Umlenkkörpers jeweils größer als die Querschnittsfläche des mittleren Abschnitts des Umlenkkörpers. Vorzugsweise sind die Querschnittsflächen der Endabschnitte entweder jeweils gleich der Querschnittsfläche des mittleren Abschnitts bzw. jeweils kleiner als die Querschnittsfläche des mittleren Abschnitts des Umlenkkörpers. Unter der Querschnittsfläche ist dabei eine Querschnittsfläche zu verstehen, die senkrecht zur Erstreckungsrichtung des Umlenkkörpers verläuft.

Bevorzugt sind die beiden freien Endabschnitte des Umlenkkörpers jeweils zylinderförmig ausgebildet und weisen eine gemeinsame, mit der Erstreckungsrichtung zusammenfallende Zylinderachse auf. Vorzugsweise ist der mittlere Abschnitt des Umlenkkörpers ebenfalls zylinderförmig ausgebildet, wobei dessen Zylinderachse bevorzugt mit der Zylinderachse der Endabschnitte des Umlenkkörpers zusammenfällt.

In einer alternativen Ausführungsform weist der mittlere Abschnitt einen längs erstreckten Querschnitt auf, insbesondere in Form eines Ovals oder einer Ellipse. Unter einem längs erstreckten Querschnitt wird eine Querschnittsform verstanden, die entlang einer ersten Richtung (Längsachse der Querschnittsfläche) eine größere Ausdehnung aufweist als entlang einer quer zur ersten Richtung orientierten zweiten Richtung. Der mittlere Abschnitt des Umlenkkörpers bildet auf diese Weise einen Hebel, dessen veränderbare Länge von der Winkellage des mittleren Abschnitts im Raum abhängt.

Zur Anlage des Sicherheitsgurtes am Umlenkkörper weist dieser einen Anlagebereich auf, um den der Sicherheitsgurt herum gelegt ist und an dem der Sicherheitsgurt entlang gleiten kann. Der Anlagebereich ist bevorzugt am mittleren Abschnitt des Umlenkkörpers vorgesehen und ist vorzugsweise dazu eingerichtet und vorgesehen, derart mit dem Sicherheitsgurt zusammenzuwirken, dass bei einer am Schultersegment angreifenden Kraft, die größer gleich einer vorbestimmbaren Schwellenkraft ist, der um den Anlagebereich herum gelegte Sicherheitsgurt den Umlenkkörper durch einen Reibschluss zu einer Drehbewegung um die Zylinderachse (Rotationsachse) mitnimmt.

Dabei ist jene Reibung zwischen dem Anlagenbereich und dem Sicherheitsgurt bei einer am Schultersegment angreifenden Kraft, die geringer ist als die besagte Schwellenkraft, derart beschaffen, dass ein Entlanggleiten des Sicherheitsgurtes am Umlenkkörper möglich ist, ohne dass dieser durch den Sicherheitsgurt mitgenommen wird und seine Abrollbewegung vollführt.

Der Anlagebereich weist eine erste und eine zweite Anlagefläche auf, wobei der Sicherheitsgurt bei einer am Schultersegment angreifenden Kraft, die kleiner als die Schwellenkraft ist, lediglich an der ersten Anlagefläche anliegt, und wobei der Sicherheitsgurt bei einer am Schultersegment angreifenden Kraft, die größer gleich jener Schwellenkraft ist, zusätzlich zur Anlage an die zweite Anlagefläche gelangt.

Dabei herrscht zwischen der zweiten Anlagefläche und dem Sicherheitsgurt eine Reibung, die ein Mitnehmen des Umlenkkörpers durch den Sicherheitsgurt bewirkt, wenn der Sicherheitsgurt an der zweiten Anlagefläche anliegt. Demgegenüber herrscht zwischen der ersten Anlagefläche und dem Sicherheitsgurt eine Reibung, die ein Entlanggleiten des Sicherheitsgurtes am Umlenkkörper ohne Mitnahme des Umlenkkörpers durch den Sicherheitsgurt erlaubt , wenn der Sicherheitsgurt an der ersten Anlagefläche anliegt.

Die erste Anlagefläche entlang einer Normalen der zweiten Anlagefläche steht statisch über die zweite Anlagefläche hinaus, so dass der Gurt bei einer am Schultersegment angreifenden Kraft, die kleiner als die vorbestimmbare Schwellenkraft ist, lediglich an der ersten Anlagefläche anliegt, wohingegen der Sicherheitsgurt bei einer am Schultersegment angreifenden Kraft, die größer gleich jener Schwellenkraft ist, sich derart deformiert, dass er sich eng an die zweite Anlagefläche (und die erste Anlagefläche) anschmiegt.

Die erste Anlagefläche wird hierbei durch einen vom Umlenkkörper abragenden Steg bereitgestellt, und zwar durch dessen dem Umlenkkörper abgewandten Oberfläche, die dem Sicherheitsgurt zugewandt ist.

Dabei umläuft der Steg am Umlenkkörper quer zur Erstreckungsrichtung ringförmig, wobei vorzugsweise eine Mehrzahl an solchen Stegen vorgesehen sind, die entlang der Erstreckungsrichtung beabstandet zueinander am Umlenkkörper umlaufen. Hierdurch werden am Umlenkkörper umlaufende Vertiefungen gebildet, deren Böden jeweils Teile der zweiten Anlagefläche bilden. Greift an dem Schultersegment eine Kraft an, die die vorbestimmbare Schwellenkraft übersteigt, so zieht sich der Sicherheitsgurt in jene Vertiefungen hinein und kommt zusätzlich zur Anlage an die zweite Anlagefläche, die die Reibung zwischen Gurt und Umlenkkörper solchermaßen erhöht, dass der Sicherheitsgurt den Umlenkkörper mitnimmt, wobei das mindestens eine längs erstreckte Element vom Umlenkkörper abgerollt wird.

In einer alternativen Variante erstreckt sich der Steg spiralförmig um den Umlenkkörper herum, so dass die erste Anlagefläche erste Abschnitte aufweist, die entlang derjenigen Richtung orientiert sind, entlang der das Schultersegment vom Umlenkkörper abgeht, sowie zweite Abschnitte, die entlang derjenigen.Richtung orientiert sind, entlang der das Beckensegment vom Umlenkkörper abgeht.

Vorzugsweise sind die vorgenannten Stege einstückig an den Umlenkkörper angeformt und bilden daher vorzugsweise einen integralen Bestandteil des Umlenkkörpers.

Ebenso besteht der Umlenkkörper vorzugsweise aus einem Metall. Der erhöhte Reibkoeffizient der zweiten Anlagefläche des Umlenkkörpers wird vorzugsweise durch eine Strukturierung der zweiten Anlagefläche erreicht. D.h., die zweite Anlagefläche weist eine Vielzahl von kleinen Erhebungen auf, die die effektive Oberfläche der zweiten Anlagefläche gegenüber der ersten Anlagefläche signifikant erhöhen und damit auch die Reibung zwischen dem Sicherheitsgurt und der zweiten Anlagefläche der Umlenkrolle

Vorzugsweise sind die Erhebungen zackenförmig (dreieckförmig) ausgebildet (Sperrnasen), wobei die Erhebungen bevorzugt im Querschnitt zwei spitzwinklig aufeinander zulaufende Seiten aufweisen, die in Bezug auf eine Normale der zweiten Anlagefläche jedoch eine unterschiedliche Steigung aufweisen können, d.h., die Erhebungen (Sperrnasen) sind bevorzugt richtungsabhängig ausgebildet, und zwar derart, dass einer Relativbewegung zwischen dem Umlenkkörper und dem Sicherheitsgurt infolge einer über das Beckensegment eingeleiteten Kraft ein größerer Widerstand entgegengesetzt wird als bei einer über das Schultersegment eingeleiteten Kraft. Die Erhebungen können in Strukturen des - in der Regel aus einzelnen Fasern hergestellten - Sicherheitsgurtes eingreifen bzw. diese hintergreifen, so dass zwischen dem Sicherheitsgurt und den Erhebungen der zweiten Anlagefläche eine formschlüssige Verbindung hergestellt wird, wenn der Sicherheitsgurt mit einer vorbestimmbaren Schwellenkraft gegen die zweite Anlagefläche drückt. Bevorzugt sind die Spitzen der Erhebungen abgeflacht, um den Sicherheitsgurt nicht zu sehr zu beanspruchen.

Weitere Merkmale und Vorteile der Erfindung werden bei der nachfolgenden Beschreibung von Ausführungsbeispielen anhand der Figuren verdeutlicht. Es zeigen:

Fig. 1: eine schematische Schnittdarstellung der an einem Umlenkkörper wirkenden Kräfte $P_{schulter}$ und $F_{Becken}$;

Fig. 2-3: eine weitere schematische Schnittdarstellung des in der Figur 1 darge- stellten Umlenkkörpers, mit einer zusätzlichen Einspannung des Umlenkkörpers in Form einer Verbindung des Umlenkkörpers mit einer Fahrzeugtragstruktur;

Fig. 4: eine weitere schematische Schnittdarstellung des in den Figuren 1 bzw. 3 dargestellten Umlenkkörpers, mit einer zusätzlichen Verbindung zwischen der Umlenkrolle und der Fahrzeugtragstruktur über ein elastisch deformierbares Deformationselement (Feder);

Fig. 5: eine perspektivische Ansicht einer Schlossumlenkeinrichtung, bei der ein Umlenkkörper über um den Umlenkkörper herumgewickelte längs erstreckte Elemente mit einer Schlosszunge verbunden ist, wobei der Umlenkkörper über zusätzliche dehnbare Deformationselemente mit der Schlosszunge verbunden ist;

Fig. 6: eine schematische Schnittdarstellung einer Abwandlung der in der Figur 5 gezeigten Schlossumlenkeinrichtung, mit Deformationselementen in Form von ausziehbaren Stiften;

Fig. 7: eine schematische Schnittdarstellung einer Abwandlung der in der Figur 5 bzw. 6 gezeigten Schlossumlenkeinrichtung, bei der das Deformationselement als eine verbiegbare Lasche ausgeformt ist;

Fig. 8:     eine perspektivische Ansicht einer Abwandlung der in der Figur 5 gezeigten Schlossumlenkeinrichtung;

Fig.9-10:     eine schematische Schnittdarstellung eines Umlenkkörpers einer Schlossumlenkeinrichtung, mit einem um den Umlenkkörper herum gelegten Sicherheitsgurt, wobei der Umlenkkörper eine erste und eine zweite Anlagefläche aufweist, und wobei der Reibungskoeffizient der zweiten Anlagefläche größer ist als der der ersten Anlagefläche;

Fig. 11-12:     eine schematische Schnittdarstellung eines Umlenkkörpers einer Schlossumlenkeinrichtung, mit daran elastisch gelagerten bewegbaren Elementen, deren Stirnseiten die erste Anlagefläche bilden;

Fig. 13-14:     eine schematische Schnittdarstellung einer Abwandlung des in den Figuren 11 und 12 dargestellten Umlenkkörpers;

Fig. 15-16:     eine schematische Schnittdarstellung einer weiteren Abwandlung des in den Figuren 11 und 12 darge-stellten Umlenkkörpers, wobei die bewegbaren Elemente mittels einer abscherbaren Verbindung mit dem Umlenkkörper verbunden sind;

Fig. 17-18:     eine schematische Schnittdarstellung einer weiteren Abwandlung des in den Figuren 11 und 12 darge-stellten Umlenkkörpers, bei dem die bewegbaren Elemente mittels einer Rastverbindung in einer ausgerückten Stellung am Umlenkkörper festgelegt sind;

Fig. 19-20:     eine schematische Schnittdarstellung einer weiteren Abwandlung des in den Figuren 11 und 12 darge-stellten Umlenkkörpers, bei dem die bewegbaren Elemente als Blattfedern ausgebildet sind;

Fig. 21-22:     eine schematische Schnittdarstellung einer weiteren Abwandlung des in den Figuren 11 und 12 darge-stellten Umlenkkörpers, bei dem ein bewegbares Element in Form einer Drahtklammer vorgesehen ist;

Fig. 23-24:     eine schematische Schnittdarstellung eines Umlenkkörpers, gemäß der erfindungsgemäßen Schlossumlenkeinrichtung mit bezüglich des Umlenkkörpers unbeweglichen ersten Anlageflächen;

Fig. 25-26:     eine schematische Schnittdarstellung einer weiteren Abwandlung des in den Figuren 23 und 24 darge-stellten Umlenkkörpers;

Fig. 27-29:     eine schematische Schnittdarstellung eines Umlenkkörpers, der zwei Endabschnitte aufweist, die über einen mittleren Abstand miteinander verbunden sind, wobei der mittlere Abschnitt einen ovalen Querschnitt aufweist;

Fig. 30-31:     eine schematische Schnittdarstellung eines Umlenkkörpers, der zwei Endabschnitte aufweist, die über einen mittleren Abstand miteinander verbunden sind, wobei sowohl die Endabschnitte als auch der mittlere Abschnitt einen ovalen Querschnitt aufweisen;

Fig. 32-34:     eine schematische Schnittdarstellung eines Umlenkkörpers in Form einer Rolle, wobei der mittlere Abschnitt des Umlenkkörpers einen Durchmesser aufweist, der gleich, kleiner oder größer ist als der Durchmesser der beiden Endabschnitte des Umlenkkörpers; und

Fig. 35-37:     perspektivische Ansichten einer Schlossumlenk-einrichtung, mit einem Umlenkkörper der in den Figuren 25 und 26 gezeigten Art.

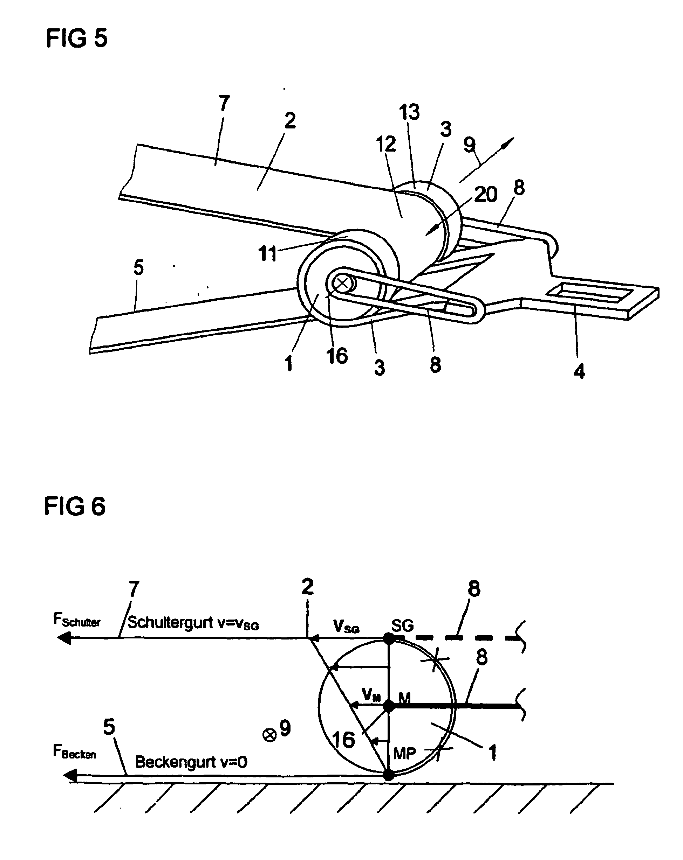

Figur 5 zeigt eine schematische, perspektivische Ansicht einer Schlossumlenkeinrichtung. Die Schlossumlenkeinrichtung weist eine Schlosszunge 4 zum Einstecken in eine (nicht dargestellte) Schlossschnalle auf, die für gewöhnlich an einer Fahrzeugtragstruktur oder an einem Fahrzeugsitz festgelegt ist. Die Schlosszunge 4 ist über zwei längs erstreckte Elemente 3 mit einem Umlenkkörper 1 verbunden, der zum Umlenken eines Sicherheitsgurtes 2 dient. Bei diesem Sicherheitsgurt 2 kann es sich z.B. um einen bekannten Dreipunktsicherheitsgurt handeln, der ausgehend von einem Gurtspeicher (z.B. Gurtrolle) zu einem etwa auf Höhe der Schulter einer bestimmungsgemäß angegurteten Person am Kraftfahrzeug gelagerten Schulterumlenkbeschlag verläuft, durch diesen umgelenkt wird und sodann diagonal über die Brust jener Person zum Umlenkkörper 1 geführt ist, von wo aus er sich entlang des Beckens des Fahrers zu einer Gurtverankerung erstreckt. Der Sicherheitsgurt 2 ist also um den Umlenkkörper 1 herumgelegt und dieser unterteilt den Sicherheitsgurt 2 in ein diagonal über den Oberkörper der besagten Person verlaufendes Schultersegment 7 und ein entlang des Beckens verlaufendes Beckensegment 5.

Der Umlenkkörper 1 erstreckt sich entlang einer Erstreckungsrichtung 9 längs und ist bei der in der Figur 5 gezeigten Ausführungsform als eine Umlenkrolle ausgebildet, deren Zylinderachse 16 parallel zu jener Erstreckungsrichtung 9 verläuft. Der Umlenkkörper 1 weist zwei freie Endabschnitte 11, 13 auf, die einander entlang der Erstreckungsrichtung 9 bzw. der Zylinderachse 16 gegenüberliegen und über einen mittleren Abschnitt 12 des Umlenkkörpers 1 insbesondere einstückig miteinander verbunden sind. D.h., die drei Abschnitte 11, 12, 13 sind vorzugsweise einstückig aneinander angeformt.

Die Schlosszunge 4 ist nun mittels der beiden längs erstreckten Elemente 3 über die beiden Endabschnitte 11, 13 mit dem Umlenkkörper 1 verbunden, indem diese ausgehend von der Schlosszunge 4 quer zur Erstreckungsrichtung 9 zu je einem zugeordneten Endabschnitt 11, 13 des Umlenkkörpers 1 geführt sind und um diesen herumgewickelt sind. Dabei sind die beiden längs erstreckten Elemente 3 jeweils gleichsinnig um den zugeordneten Endabschnitt 11, 13 gewickelt, wobei die längs erstreckten Elemente 3 den jeweiligen Endabschnitt 11, 13 vorzugsweise um 180° bis 360° umgreifen. Bevorzugt sind die längs erstreckten Elemente 3 über ihr jeweiliges Ende fest mit der Umlenkrolle 1 verbunden (z.B. durch eine Schweißverbindung oder eine formschlüssige Verbindung).

Die längs erstreckten Elemente 3 sind solchermaßen ausgebildet bzw. am Umlenkkörper 1 angeordnet, dass der Umlenkkörper 1 quer zur Erstreckungsrichtung 9 von der Schlosszunge 4 beabstandet angeordnet ist und zusammen mit den längs erstreckten Elementen 3 und der Schlosszunge 4 eine Durchgangsöffnung der Schlossumlenkeinrichtung begrenzt, durch die der um den Umlenkkörper 1 herum gelegte Sicherheitsgurt 2 geführt ist.

Dabei liegt der Sicherheitsgurt 2 an einem Anlagebereich 20 des Umlenkkörpers 1 an, der am mittleren Abschnitt 12 des Umlenkkörpers 1 ausgebildet ist. Der Anlagebereich 20 ist so beschaffen, dass der Sicherheitsgurt 2 am Anlagebereich 20 entlang gleiten kann. Greift allerdings am Schultersegment 7 eine Kraft an, die eine vorbestimmbare Schwellenkraft übersteigt, verändert der Anlagebereich 20 seine Eigenschaften dahingehend, dass nunmehr eine erhöhte Reibung zwischen dem Sicherheitsgurt 2 und dem Anlagebereich 20 herrscht, die bewirkt, dass das Entlanggleiten am Anlagebereich 20 verhindert wird und der Sicherheitsgurt 2 den Umlenkkörper 1 mitnimmt. Hierdurch werden die längs erstreckten Elemente 3 von den Endabschnitten 11, 13 des Umlenkkörpers 1 abgerollt, was eine Begrenzung der resultierenden am Schultersegment 7 angreifenden Kraft zur Folge hat. Der Anlagebereich 20 ist so beschaffen, dass die vorbestimmbare Schwellenkraft bei einer kollisionstypischen Verzögerung des Kraftfahrtzeuges überschritten wird, bei der eine mittels des Sicherheitsgurtes 2 bestimmungsgemäß angegurtete Person mit einer entsprechenden Geschwindigkeit in den Sicherheitsgurt 2 fällt.

Gegebenenfalls können zur Energieabsorption zusätzliche (optionale) Deformationselemente 8 vorgesehen sein. Bei der in der Figur 5 dargestellten Ausführungsform handelt es sich dabei um zwei elastisch deformierbare Elemente in Form einer geschlossenen Schlaufe, die jeweils einen entlang der Zylinderachse 16 vom Umlenkkörper 1 abstehenden Achsstummel mit der Schlosszunge 4 verbinden. Hierzu umgreift ein solches Deformationselement 8 mit einem Schlaufenabschnitt einen mit der Zylinderachse 16 fluchtenden Achstummel des Umlenkkörpers 1 und ist mit einem gegenüberliegenden Schlaufenabschnitt unter Vorspannung an einem an der Schlosszunge 4 ausgebildeten Haken eingehängt. Beim Abrollen der längs erstreckten Elemente 3 vom Umlenkkörper 1 werden die beiden Deformationselemente 8 unter Absorption von Energie gedehnt.

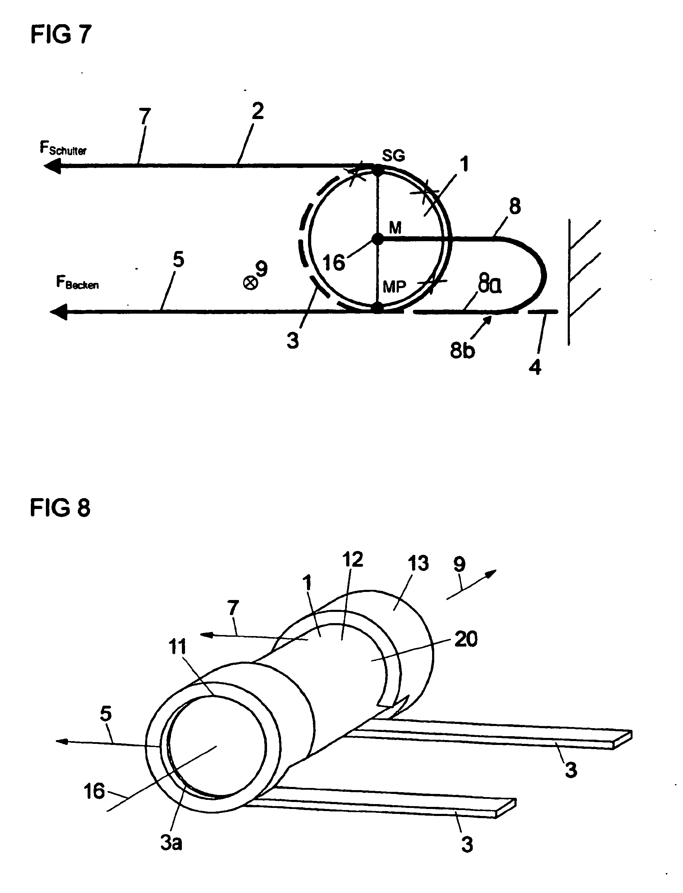

Figur 7 zeigt eine alternative Ausführungsform, bei der im Unterschied zur Figur 5 das Deformationselement 8 als eine inelastisch (plastisch) deformierbare Lasche ausgebildet ist, die wiederum einen Achsstummel des Umlenkkörpers 1 (oder einen entsprechenden Bereich des Umlenkkörpers) mit der Schlosszunge 4 verbindet, wobei die Lasche einen Winkel von zumindest 180° einschließt. Des Weiteren ist die Lasche 8 mit einem Endabschnitt 8a über eine Schwachstelle 8b mit der Schlosszunge 4 verbunden. Im Falle des Abrollens bzw. Abwickelns der längs erstreckten Elemente 3 vom Umlenkkörper 1 erfährt die Lasche 8 zunächst eine Biegeverformung, unter der die Lasche 8 zunächst gerade gezogen wird. Bei zunehmender Entfernung zwischen Umlenkkörper 1 und Schlosszunge 4 werden dann über die geradegezogene Lasche 8 Kräfte in die Schwachstelle 8b eingeleitet, die infolgedessen kontrolliert - ebenfalls unter Absorption von Energie - einreißt, ggf. bis zur vollständigen Durchtrennung der Schwachstelle 8b.

Bei dem Ausführungsbeispiel gemäß Figur 6 ist das Deformationselement 8 als ein ausziehbarer Stift ausgebildet, der den Umlenkkörper 1 (Umlenkrolle) im Bereich der Zylinderachse 16 mit der Schlosszunge 4 verbindet. Alternativ oder zusätzlich ist es möglich einen solchen Stift 8 an einem Bereich des Umlenkkörpers 1 vorzusehen, von dem aus das Schultersegment 7 von der Umlenkrolle abgeht. Bevorzugt wird die Erstreckungsrichtung des Stiftes 8 dabei an derjenigen Richtung ausgerichtet, entlang der das Schultersegment 7 vom Umlenkkörper 1 abgeht. Bei einem als Stift ausgebildeten Deformationselement 8 wird eine Energieabsorption vorzugsweise erreicht, indem der Stift 8 beim Abrollen der längs erstreckten Elemente 3 - hierbei entfernt sich der Umlenkkörper 1 von der Schlosszunge 4 - aus einer an der Schlosszunge 4 (oder ggf. dem Umlenkkörper 1) vorgesehenen Aussparung herausgezogen wird. Dabei kann der Stift 8 derart durch die Aussparung gehalten werden, dass dem Herausziehen des Stiftes 8 ein (vorbestimmbarer) Widerstand entgegengesetzt wird. Vorzugsweise wird dieser Widerstand dadurch bereitgestellt, dass der Stift 8 beim Herausziehen aus der zugeordneten Aussparung um eine oder mehrere Achsen umgebogen wird.

Sofern der Stift 8 mit der Zylinderachse 16 (ggf. über einen Achsstummel) der Umlenkrolle 1 verbunden werden soll, wird der Stift 8 vorzugsweise gelenkig gelagert, so dass er die Rotation der Umlenkrolle 1 nicht beeinträchtigt. Bei Anbringung des Stiftes 8 mit einem Hebelarm relativ zur Zylinderachse 16 kann der Stift 8 auf eine zusätzliche zylindrische Fläche aufgewickelt werden, so dass der Hebelarm konstant bleibt. Wenn die Wickelfläche keinen konstanten Abstand zur Zylinderachse 16 aufweist, ist eine spezielle Kennung der Kraftbegrenzung möglich, beispielsweise degressiv oder progressiv.

Figur 8 zeigt eine weitere Ausführungsform bei der im Unterschied zu den Figuren 5 und 7 keine zusätzlichen Deformationselemente 8 vorgesehen sind. Stattdessen sind bei der in der Figur 8 dargestellten Schlossumlenkeinrichtung die um die Endabschnitte 11, 13 des Umlenkkörpers 1 gewickelten Bereiche der längs erstreckten Elemente 3 selbst über zerstörbare Verbindungen 3a (Schwachstellen 3a) mit den Endabschnitten 11, 13 des Umlenkkörpers 1 verbunden, um dem Abwickeln der längs erstreckten Elemente 3 vom Umlenkkörper 1 durch ein Aufreißen entlang der Schwachstellen 3a einen zusätzlichen definierten (kontrollierbaren) Widerstand entgegenzusetzen. Für eine Sichtbarmachung der Schwachstellen 3a wurde der Endabschnitt 11 eingerückt bezüglich des vorderen längs erstreckten Elementes 3 dargestellt.

Damit der Sicherheitsgurt 2 ab einer bestimmten Schwellenkraft den Umlenkkörper 1 mitnehmen kann, so dass die längs erstreckten Elemente 3 vom Umlenkkörper 1 abgerollt werden, muss der Anlagebereich 20 des Umlenkkörpers 1 abhängig von der am Sicherheitsgurt 2 angreifenden Kraft zwei Zustände einnehmen können, wobei der eine Zustand des Anlagebereichs 20 dadurch gekennzeichnet ist, dass der Sicherheitsgurt 2 bei an diesem angreifenden Kräften, die unterhalb der vorbestimmbaren Schwellenkraft liegen, am Anlagebereich 20 entlang gleiten kann, ohne dass die längs erstreckten Elemente 3 abgerollt werden. Der andere Zustand ist dahingegen dadurch gekennzeichnet, dass zwischen dem Sicherheitsgurt 2 und dem Anlagebereich 20 ein Reib- oder Formschluss erzeugt wird, der eine Relativbewegung zwischen Sicherheitsgurt 2 und Anlagebereich 20 verhindert, wenn die am Schultersegment 7 angreifenden Kräfte jene Schwellenkraft übersteigen.

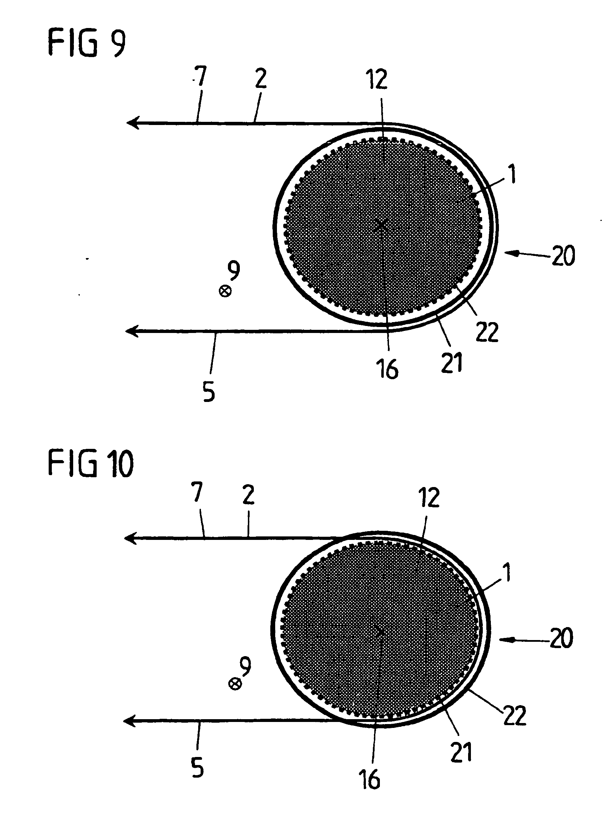

Der Anlagebereich 20 weist daher gemäß den Figuren 9 und 10 eine erste Anlagefläche 21 auf, an der der Sicherheitsgurt 2 anliegt, wenn die am Schultersegment 7 angreifenden Kräfte unterhalb der Schwellenkraft liegen, sowie eine zweite Anlagefläche 22, an der der Sicherheitsgurt 2 anliegt, wenn die besagten Kräfte die Schwellenkraft übersteigen. Dabei ist die Reibung zwischen der ersten Anlagefläche 21 und dem Sicherheitsgurt 2 dergestalt, dass der Sicherheitsgurt 2 an der ersten Anlagefläche 21 entlang gleiten kann, wohingegen die Reibung zwischen der zweiten Anlagefläche 22 und dem Sicherheitsgurt 2 so beschaffen ist, dass der an der zweiten Anlagefläche 22 anliegende Sicherheitsgurt 2 eine Kraft in den Umlenkkörper 1 einleiten kann, aufgrund der der Umlenkkörper 1 durch den Sicherheitsgurt 2 mitgenommen wird und die längs erstreckten Elemente 3 vom Umlenkkörper 1 abgerollt werden.

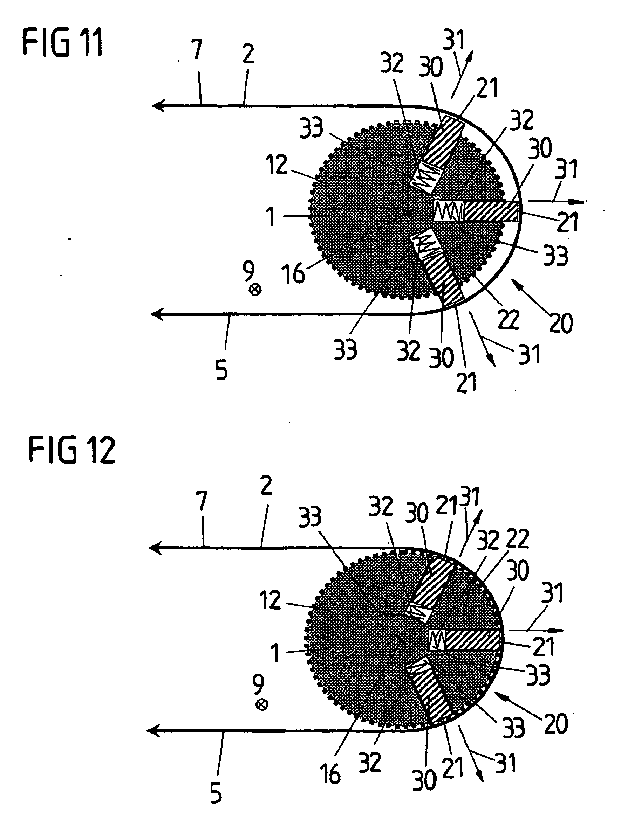

Gemäß dem in den Figuren 11 und 12 gezeigten Ausführungsbeispiel des Umlenkkörpers 1 sind an dem Umlenkkörper 1 bewegbare Elemente 30 gelagert, die zwischen einer ersten und einer zweiten Position hin und her bewegt werden können. Die bewegbaren Elemente 30 sind dabei jeweils in einer schlitz- oder ggf. sacklochförmigen Ausnehmung 33 des Umlenkkörpers 1 formschlüssig geführt, die jeweils entlang einer Normalen 31 zur Oberfläche 22 des Umlenkkörpers 1 erstreckt sind. In ihrer ersten Position stehen die bewegbaren Elemente 30 mit einer dem Sicherheitsgurt 2 zugewandten Stirnseite 21 aus der jeweils zugeordneten Ausnehmung 33 heraus. In diesem Fall liegt der um den Umlenkkörper 1 herum gelegte Sicherheitsgurt 2 lediglich an jenen Stirnseiten 21 an, die in ihrer Gesamtheit die erste Anlagefläche 21 bilden.

Die beweglichen Elemente 30 stützen sich jeweils über ein Federelement 32 an einem Boden der den bewegbaren Elementen 30 jeweils zugeordneten Ausnehmungen 33 ab. Entgegen der durch die Federelemente 32 bereitgestellten Gegenkraft kann jedes bewegbare Element 30 aus seiner ausgerückten ersten Position in seine zweite Position gemäß Figur 12 bewegt werden, in der der Sicherheitsgurt 2 flächig an der äußeren, nach außen gewandten Oberfläche 22 des mittleren Abschnittes 12 des Umlenkkörpers 1 zu liegen kommt. Die zweite Anlagefläche 22 wird also durch die die Ausnehmungen 33 der bewegbaren Elemente 30 berandende Oberfläche 22 des mittleren Abschnittes 12 des Umlenkkörpers 1 gebildet. Die Bewegung der bewegbaren Elemente 30 aus der ersten Position in jene zweite Position wird durch den Sicherheitsgurt 2 bewirkt, der die bewegbaren Elemente 30 in die Ausnehmungen 33 drückt, sofern die am Schultersegment 7 angreifende Kraft die besagte Schwellenkraft übersteigt.

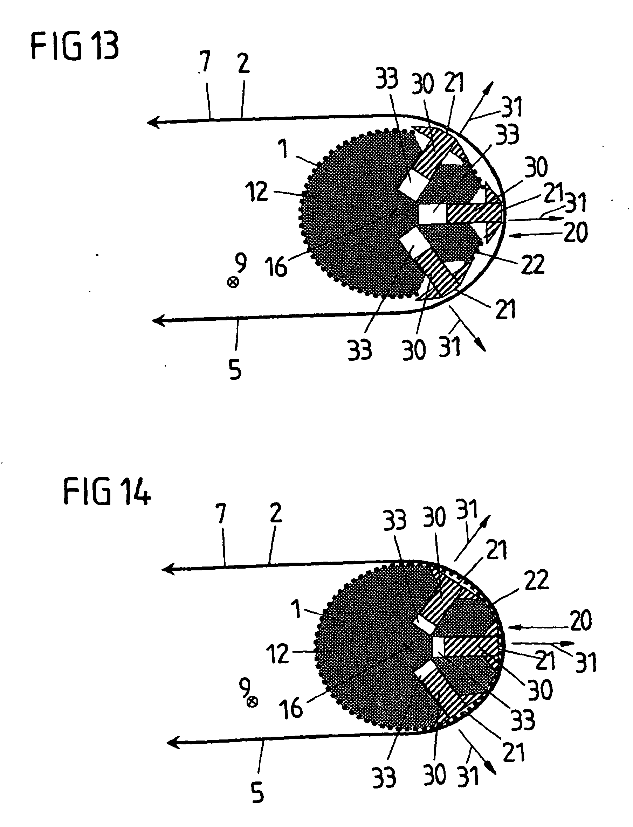

Die Figuren 13 und 14 zeigen eine Abwandlung des in den Figuren 11 und 12 gezeigten Umlenkkörpers 1, bei dem im Unterschied zu den Figuren 11 und 12 die bewegbaren Elemente 30 nicht durch Federelemente 32 in ihrer ersten Position gehalten werden, sondern durch ihre eigene Elastizität. Dabei weisen die bewegbaren Elemente 30 je einen verbreiterten Kopf auf, mit einer dem Sicherheitsgurt 2 zugewandten Oberfläche 22, wobei diese Oberflächen 22 in ihrer Gesamtheit die erste Anlagefläche 22 bilden. In der ersten Position liegen diese Köpfe mit einem äußersten umlaufenden Randbereich auf einem die jeweilige zugeordnete Ausnehmung 33 berandenden Randbereich auf, so dass die ersten Anlageflächen 21 (Oberflächen der Köpfe) entlang einer Normalen 31 der zweiten Anlagefläche 22 (Oberfläche des Umlenkkörpers) über jene zweite Anlagefläche 22 hinausstehen. Der Sicherheitsgurt 2 kann daher in dieser ersten Position der bewegbaren (elastischen) Elemente 30 nur an jenen Köpfen der bewegbaren Elemente 30 (erste Anlagefläche) anliegen. Übersteigt die am Schultersegment 7 angreifende Kraft die vorbestimmbare Schwellenkraft drückt der Sicherheitsgurt 2 die bewegbaren Elemente 30 unter elastischer Verformung der Köpfe der bewegbaren Elemente 30 in ihre zugeordneten Ausnehmungen 33, so dass der Sicherheitsgurt 2 flächig an der zweiten Anlagefläche 22 zu liegen kommt. Die verformten Köpfe werden dabei vorzugsweise durch entsprechend geformte (konische) Aufweitungen der Ausnehmungen 33 formschlüssig aufgenommen.

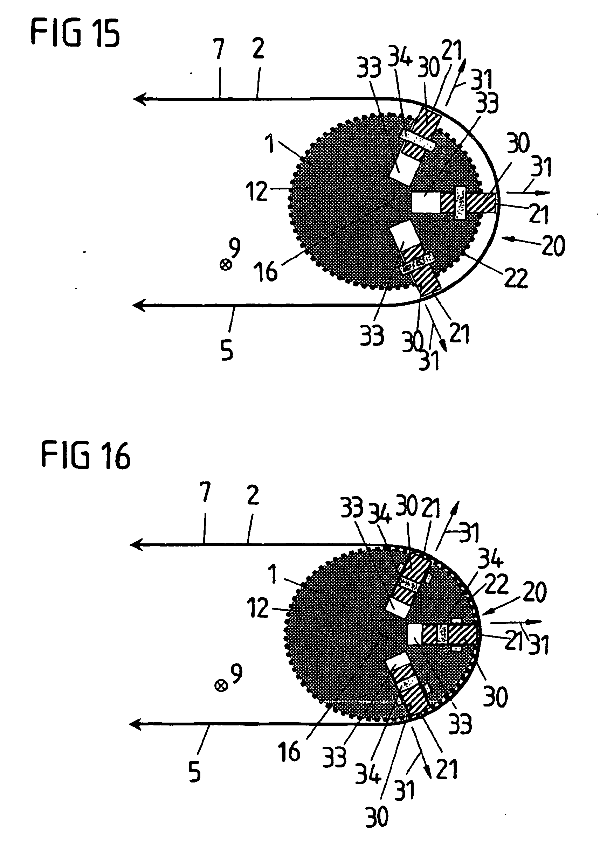

Die Figuren 15 und 16 zeigen eine Abwandlung des in den Figuren 11 und 12 gezeigten Umlenkkörpers 1, bei dem im Unterschied zu den Figuren 11 und 12 die bewegbaren Elemente 30 nicht durch Federelemente 32 in ihren ersten ausgerückten Positionen gehalten werden, sondern durch ein abscherbares Verbindungsmittel 34, das von den bewegbaren Elementen 30 jeweils quer zu deren Bewegungsrichtung 31, die normal zur zweiten Anlagefläche 22 orientiert ist, absteht und in eine Aussparung eingreift, die an einer Wandung der betreffenden Ausnehmungen 33 ausgebildet ist. Übersteigt die am Schultersegment 7 angreifende Kraft die Schwellenkraft drückt der Sicherheitsgurt 2 derart gegen die bewegbaren Elemente 30, dass die Verbindungsmittel 34 von den bewegbaren Elementen 30 abgeschert und die bewegbaren Elemente 30 jeweils in ihre zweiten Position eingerückt werden, so dass der Sicherheitsgurt 2 zur Anlage an die zweiten Anlagefläche 22 gelangt.

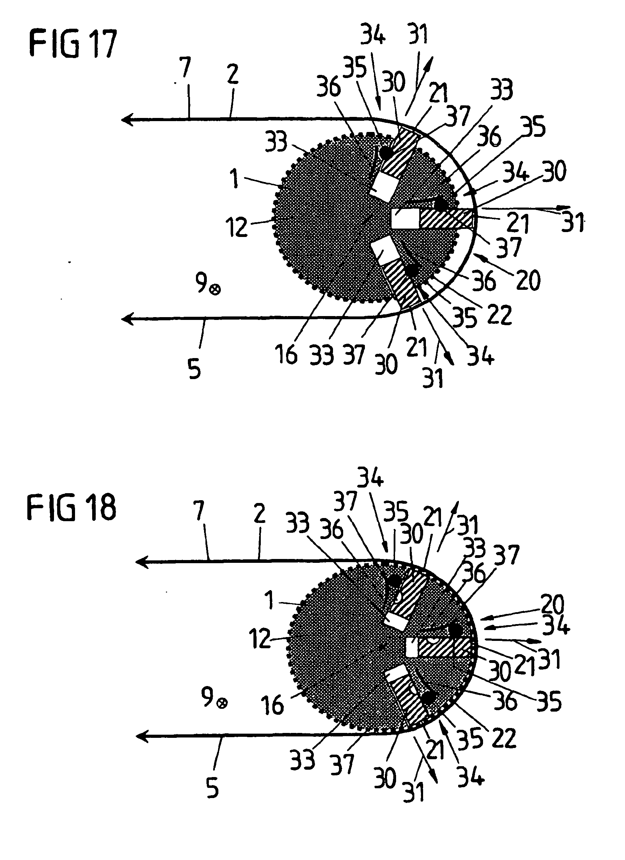

Die Figuren 17 und 18 zeigen eine Abwandlung des in den Figuren 15 und 16 dargestellten Umlenkkörpers 1, bei dem die bewegbaren Elemente 30 jeweils durch ein reversibles, zerstörungsfrei arbeitendes Verbindungsmittels 34 in der ersten Position gehalten werden. Hierzu ist an den bewegbaren Elementen 30 jeweils eine Aussparung 37 vorgesehen, in die eine mittels einer Blattfeder 36 beaufschlagte Kugel 35 quer zur Bewegungsrichtung 31 des jeweiligen bewegbaren Elementes 30 gedrückt wird, so dass der gegen die bewegbaren Elemente 30 drückende Sicherheitsgurt 2 die bewegbaren Elemente 30 erst in deren zweite, eingerückte Position bewegen kann, wenn die am Schultersegment 7 angreifende Kraft die Schwellenkraft übersteigt. Ist dies der Fall, werden die Kugeln 35 entgegen der Kraft der Blattfedern 36 aus den Aussparungen 37 herausgedrückt und die bewegbaren Elemente 30 gelangen in ihre eingerückten zweiten Positionen gemäß Figur 18.

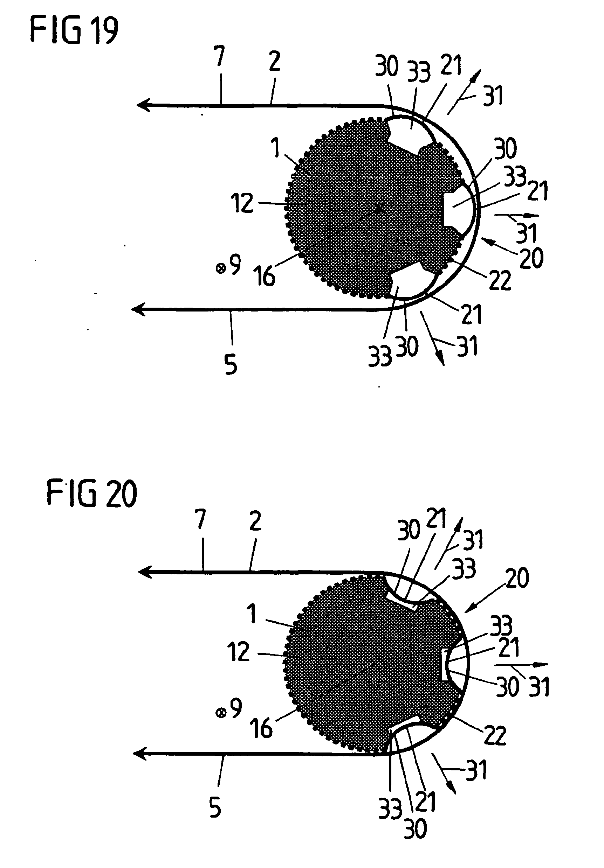

Die Figuren 19 und 20 zeigen eine weitere Ausführungsform eines Umlenkkörpers 1, bei dem die bewegbaren Elemente 30 als Blattfedern ausgebildet sind. Dabei ist jede Blattfeder 30 über einer ihr zugeordneten Ausnehmung 33 angeordnet, wobei sie sich an einem die betreffende Ausnehmung 33 umlaufenden Randbereich abstützt. In ihrer ersten Position ist die Blattfeder dabei in Richtung auf den den Umlenkkörper 1 umlaufenden Sicherheitsgurt 2 gewölbt, so dass der Sicherheitsgurt 2 lediglich an den Blattfedern 30 anliegt. D.h., die erste Anlagefläche 21 wird durch die dem Sicherheitsgurt 2 zugewandten Oberflächen 21 der Blattfedern 30 gebildet. Übersteigt die am Schultersegment 7 angreifende Kraft die Schwellenkraft, drückt der Sicherheitsgurt 2 so gegen die Blattfedern 30, dass sich deren Wölbung umkehrt und in die jeweilige Ausnehmung 33 hinein steht, so dass der Sicherheitsgurt 2 an der zweiten Anlagefläche 22 zu liegen kommt, die wie gehabt durch die die Ausnehmungen 33 berandende Oberfläche 22 des Umlenkkörpers 1 gebildet wird.

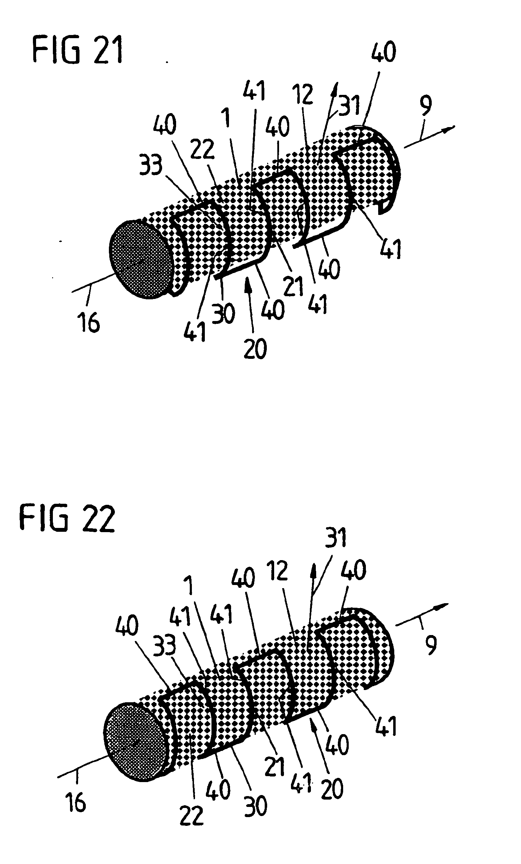

Die Figuren 21 bis 22 zeigen eine Ausführungsform des Umlenkkörpers 1, bei der das bewegbare Element 30 durch eine Drahtklammer gebildet wird, die sich entlang der Oberfläche 22 (zweite Anlagefläche 22) des Umlenkkörpers 1 erstreckt. Die Drahtklammer 30 ist über zwei freie Endabschnitte am Umlenkkörper 1 festgelegt und weist eine dem Sicherheitsgurt 2 zugewandte Oberfläche auf, die die erste Anlagefläche 21 bildet. Die Drahtklammer 30 kann durch den anliegenden Sicherheitsgurt 2 aus ihrer ersten Position, in der der Sicherheitsgurt 2 die darunterliegende zweite Anlagefläche 22 nicht berühren kann, in ihre zweite Position bewegt werden, in der die Drahtklammer 30 in einer entsprechend geformten Ausnehmung 33 des Umlenkkörpers 1 angeordnet ist derart, dass der Sicherheitsgurt 2 an der zweiten Anlagefläche 22 anliegen kann. Das Bewegen der Drahtklammer 30 aus der ersten in die zweite Position erfolgt durch den Sicherheitsgurt 2 in der bereits beschriebenen Weise. Damit der Sicherheitsgurt 2 in der ersten Position der Drahtklammer 30 effektiv auf Abstand zur zweiten Anlagefläche 22 des Umlenkkörpers 1 gehalten werden kann, weist die Drahtklammer 30 quer zur Erstreckungsrichtung 9 verlaufende Abschnitte 41 auf, die durch entlang der Erstreckungsrichtung 9 verlaufende Abschnitte 40 miteinander verbunden sind, so dass sich ein rechteckförmiger Verlauf der Drahtklammer 30 ergibt.

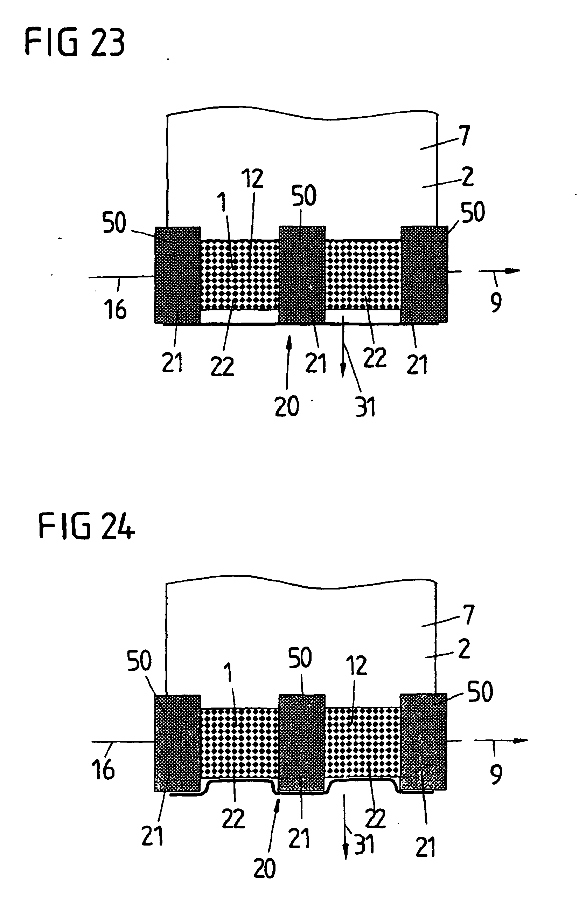

Bei dem Umlenkkörper 1 gemäß den Figuren 23 und 24 wird die erste Anlagefläche 21 durch die dem Sicherheitsgurt 2 zugewandten Oberflächen von Stegen 50 gebildet, die den Umlenkkörper 1 quer zur Erstreckungsrichtung 9 ringförmig umlaufen. Zwischen zwei solchermaßen umlaufenden Stegen 50 erstrecken sich die zweiten Anlageflächen 22, mit ihren höheren Reibungskoeffizienten. Solange die an dem Schultersegment 7 angreifende Kraft die Schwellenkraft nicht übersteigt, liegt der um den Umlenkkörper 1 herum gelegte Sicherheitsgurt 2 lediglich an den besagten Oberflächen 21 der Stege 50 an (erste Anlagefläche 21). Übersteigt jedoch jene Kraft die Schwellenkraft, deformiert sich der Sicherheitsgurt 2 durch die auf ihn wirkenden Kräfte derart, dass er auch zur Anlage an die zweiten Anlageflächen 22 gelangt, die zwischen den Stegen 50 umlaufen (vgl. Figur 24).

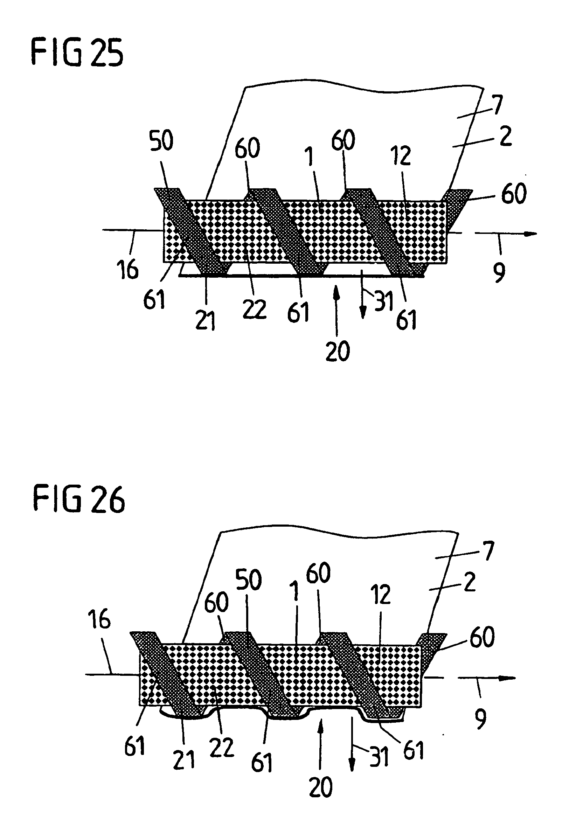

Die Figuren 25 und 26 zeigen eine Abwandlung des in den Figuren 23 und 24 gezeigten Umlenkkörpers 1 bei der der Steg 50 im Unterschied zu den Figuren 23 und 24 spiralförmig am Umlenkkörper 1 umläuft. In gleicher Weise umläuft deshalb die tieferliegende zweite Anlagefläche 22 spiralförmig am Umlenkkörper 1. Dies bewirkt, dass es Abschnitte 60 der ersten Anlagefläche 21 gibt, die entlang der Gurtverlaufsrichtung des abgehenden Schultersegmentes 7 orientiert sind und gegenüberliegende zweite Abschnitte 61, die entlang der Gurtverlaufsrichtung des vom Umlenkkörper 1 abgehenden Beckensegmentes 5 orientiert sind. Auf diese Weise wird die Anlage des jeweiligen Segmentes 7, 5 an der zweiten Anlagefläche 22 optimiert.

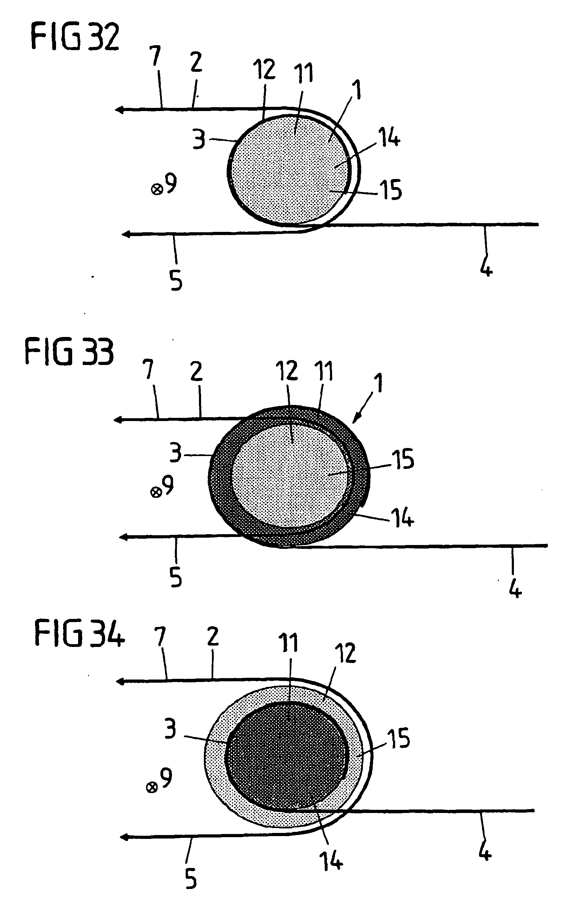

Um die durch den Sicherheitsgurt 2 auf den Umlenkkörper 1 bzw. die längs erstreckten Elemente 3 ausübbare Kraft zu beeinflussen, kann der mittlerer Abschnitt 12 des Umlenkkörpers 1, um den der Sicherheitsgurt 2 herum gelegt ist, gemäß Figur 34 im Querschnitt einen größeren Durchmesser bzw. Radius erhalten als die beiden Randabschnitte 11, 13 des Umlenkkörpers 1. Natürlich ist es auch möglich die Durchmesser der Endabschnitte 11, 13 und des mittleren Abschnittes 12 gleich groß zu halten (Figur 32), oder aber den Durchmesser des mittleren Abschnittes 12 gegenüber dem Durchmesser der Endabschnitte 11, 13 abzusenken (Figur 33). Im Fall der in der Figur 34 dargestellten Situation bedeutet dies, dass eine am Schultersegment 7 angreifende (das Schultersegment 7 spannende) Kraft eine Rotation der Umlenkrolle 1 bewirkt, sofern die besagte Schwellenkraft überschritten wird, wohingegen eine am Beckensegment 5 angreifende und das Beckensegment 5 spannende Kraft einer solchen Rotation entgegen wirkt bzw. in die Auslegung der Kraftverhältnisse zur Begrenzung der am Schultersegment angreifenden Kräfte miteinbezogen werden kann. Damit ist es möglich, auf die Verwendung zusätzlicher Energieaufnahmeeinrichtungen zu verzichten, da die Begrenzung der am Schultersegment angreifenden Kraft allein über das Abwickeln der längs erstreckten Elemente 3 und die am Beckensegment 5 angreifenden Kraft realisiert werden kann. Da die resultierende Schultergurtkraft von der Beckengurtkraft abhängt und diese von der Insassengröße, ist bei einer derartigen Anordnung eine Anpassung der Rückhaltung am Schultersegment 7 für den jeweiligen Insassen möglich bzw. ergibt sich selbstadaptiv. Ein weiterer Vorteil liegt darin, dass bedingt durch den Hebelarm des Beckensegmentes 5 bezüglich des Abrollpunktes MP die Rotation der Umlenkrolle 1 in eine zusätzliche Straffung des Beckensegmentes 5 umgesetzt wird.

Im Fall der Figur 32 kann lediglich die am Schultersegment 7 angreifende Kraft eine Rotation der Umlenkrolle 1 (unter Abwickeln der längs erstreckten Elemente 3) bewirken, wohingegen bei der in der Figur 33 dargestellten Situation sowohl die am Schultersegment 7 angreifende Kraft als auch die am Beckensegment 5 angreifende Kraft eine Rotation der Umlenkrolle 1 bewirken kann.

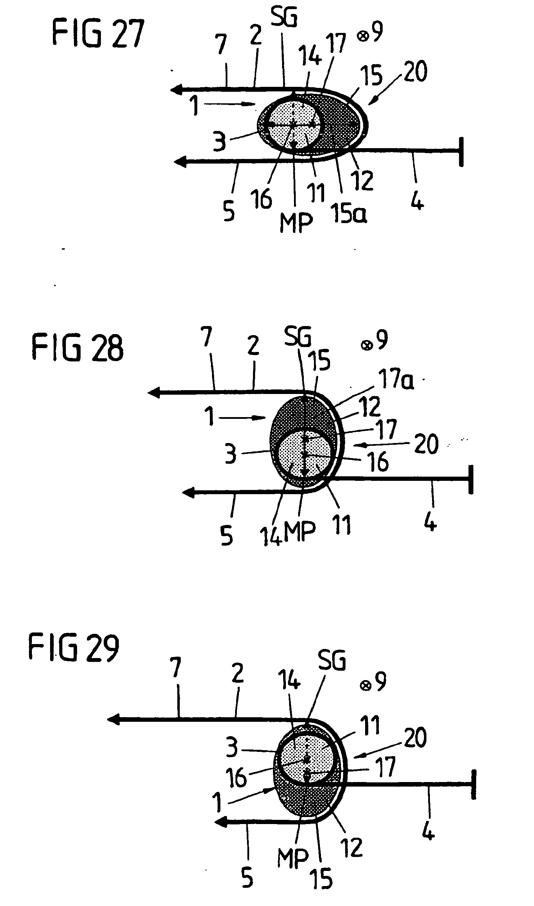

Des Weiteren besteht die Möglichkeit gemäß den Figuren 27 bis 29 die auf die längs erstreckten Elemente 3 ausgeübten Kräfte weg- bzw. zeitabhängig zu variieren, indem der mittlere Abschnitt 12 eine Ausformung erhält, die von der kreiszylindersymmetrie bezüglich der Zylinder- oder Rotationsachse 16 abweicht. Erhält der mittlere Abschnitt 12 beispielsweise einen länglichen Querschnitt (z.B. ellipsenförmig), weist der mittlere Abschnitt 12 je nach Winkellage einen unterschiedlich langen Hebelarm auf, dessen Länge durch den Abstand zwischen demjenigen Punkt SG, von dem (im Querschnitt betrachtet) das Schultersegment 7 vom mittleren Abschnitt 12 des Umlenkkörpers 1 abgeht und demjenigen Punkt MP, über den die Endabschnitte 11, 13 (im Querschnitt betrachtet) abrollen, bestimmt wird

Dies kann auch dadurch bewirkt werden, dass der mittlere Abschnitt 12 exzentrisch zur Zylinderachse 16 angeordnet wird.

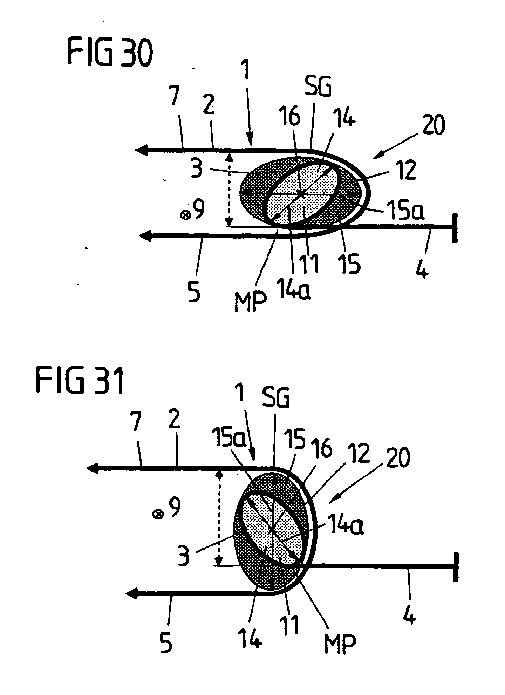

Des Weiteren ist in der Ausführungsform gemäß den Figuren 30 und 31 vorgesehen, dass sowohl der mittlere Abschnitt 12 als auch die beiden Endabschnitte 11, 13 jeweils eine längs erstreckte Querschnittsfläche 14, 15 aufweisen, die sich jeweils entlang einer Längsachse 14a, 15a längs erstrecken, wobei die Längsachsen 14a der Querschnitte 14 der Endabschnitte 11, 13 jeweils einen (nicht verschwindenden) Winkel mit der Längsachse 15a des Querschnittes 15 des mittleren Abschnittes 12 bilden. Auch auf diese Weise wird der vorstehend beschriebene Abstand SG-MP und damit der Kraftverlauf beim Abwickeln der längs erstreckten Elemente 3 weg- bzw. zeitabhängig variiert.

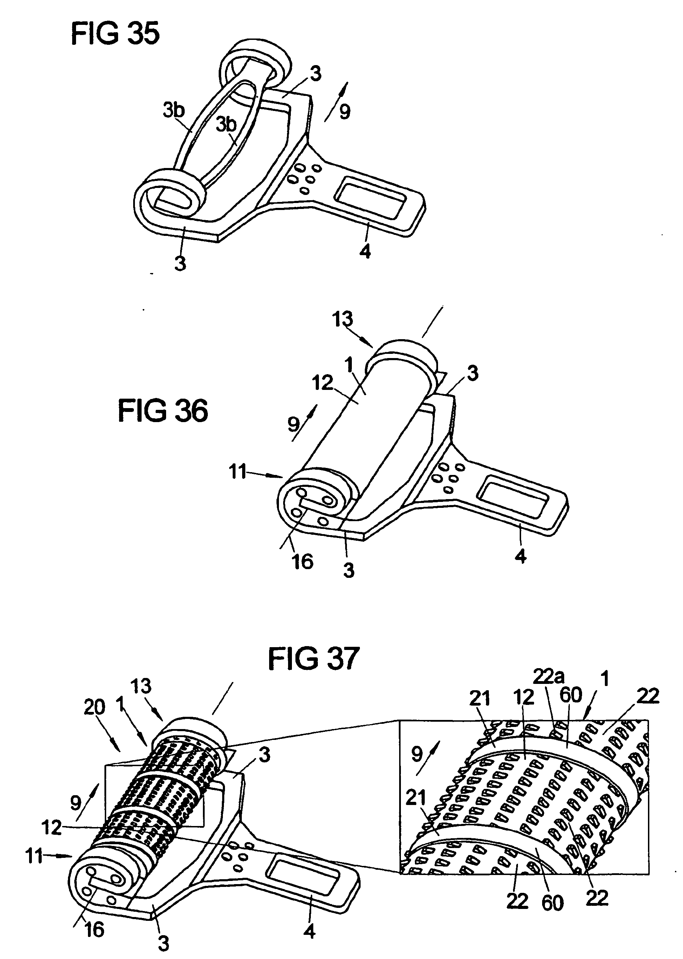

Die Figuren 35 bis 37 zeigen eine weitere Ausführungsform einer Schlossumlenkeinrichtung, bei der die Schlosszunge 4 einstückig an die beiden längs erstreckten Elemente 3 angeformt ist. Die Schlosszunge 4 wird zusammen mit den längs erstreckten Elementen 3 als einheitliches Teil aus einem Metallstück ausgestanzt und anschließend entsprechend gerollt und gebogen. Die beiden längs erstreckten Elemente 3 sind durch Verstärkungsstreben 3b miteinander verbunden, die entlang der Erstreckungsrichtung 9 erstreckt sind. Die Verstärkungsstreben 3b verhindern ein Aufspreizen der längs erstreckten Elemente 3 beim Einleiten der Gurtkräfte in die Schlossumlenkeinrichtung. Das Vorsehen von zwei Verstärkungsstreben 3b dient der besseren Übertragung des Drehmomentes, welches über die am Schultersegment 7 angreifende Kraft in den Umlenkkörper 1 eingeleitet wird. Um den Umlenkkörper 1 herzustellen, wird das verformte Stanzteil (Schlosszunge 4 und daran ausgebildete längs erstreckte Elemente 3) in eine Spritzgussmaschine eingelegt und um die Verstärkungsstreben 3b herum mit Kunststoff umspritzt. Der Anlagebereich 20 gemäß Figuren 25, 26 und 37 kann ebenfalls beim Umspritzen ausgebildet werden und ist dann einstückig an die Umlenkrolle 1 angeformt. Es ist auch möglich, den Anlagebereich 20 aus anderen Materialen, insbesondere Metall, auszubilden und nachträglich auf die Umlenkrolle 1 aufzubringen. Der erhöhte Reibungskoeffizient der zweiten Anlagefläche 22 wird bei dem in den Figuren 35 bis 37 dargestellten Ausführungsbeispiel vorzugsweise durch eine Strukturierung der zweiten Anlagefläche 22 erzeugt (vgl. Figur 37). Hierzu sind an der zweiten Anlagefläche Erhebungen 22a ausgebildet, die in einem senkrecht zur Erstreckungsrichtung 9 verlaufenden Querschnitt zwei spitzwinklig aufeinander zulaufende Seiten aufweisen, die in Bezug auf eine Normale der zweiten Anlagefläche jedoch eine unterschiedliche Steigung aufweisen können, d.h., die Erhebungen 22a sind richtungsabhängig ausgebildet, und zwar derart, dass bei einer Relativbewegung zwischen Umlenkkörper 1 und Sicherheitsgurt 2 infolge einer über das Beckensegment 5 eingeleitete Kraft ein größerer Widerstand entgegengesetzt wird als bei einer über das Schultersegment 7 eingeleiteten Kraft. Vorzugsweise sind die Spitzen der Erhebungen abgeflacht, um den Sicherheitsgurt 2 nicht zu sehr zu beanspruchen.

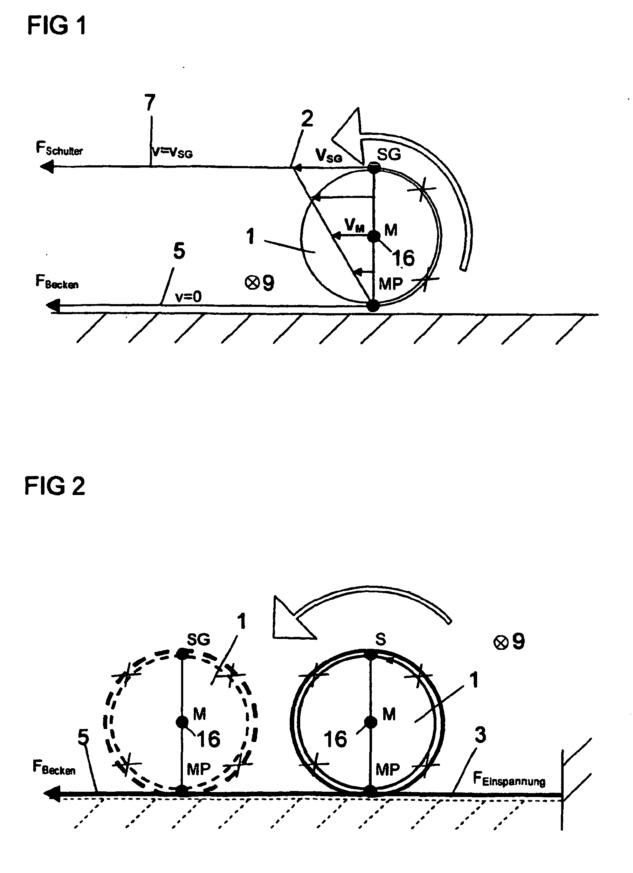

Nachfolgend soll anhand der Figuren 1 bis 6 noch einmal das der Erfindung zugrunde liegende Prinzip verdeutlicht werden.

Das zentrale Element dieses Prinzips ist der Umlenkkörper 1, der vorzugsweise die Form einer Umlenkrolle aufweist, die zwei schaltbare Zustände annehmen kann. Im normalen Gebrauch läuft der Sicherheitsgurt 2 frei um die Umlenkrolle 1 herum, was einen niedrigen Reibwert voraussetzt. Bei einem Unfall wird jedoch diese freie Umlaufbewegung unterbunden, entweder durch Reibschluss mit einem hohen Reibwert oder durch einen Formschluss. Auf diese Weise bilden die Umlenkrolle 1 und der Sicherheitsgurt 2 eine Einheit im Bereich der Berührung und unterbinden hiermit jegliche Relativbewegung zueinander. Wie die daraus resultierende Kinematik im Einzelnen funktioniert, wird nachfolgend erläutert.

Die Umlenkrolle 1 ist gemäß Figur 1 in der Lage, auf der gedachten Ebene des Beckensegmentes 5 abzurollen. Bei dieser Bewegung befindet sich der Momentanpol MP auf jener Ebene, so dass die momentane Geschwindigkeit dieses Punktes verschwindet. Aufgrund der Tatsache, dass keine relative Bewegung zwischen dem Beckensegment 5 und der Umlenkrolle 1 im Bereich der Kontaktstelle stattfinden kann, ist die momentane Geschwindigkeit des Beckensegmentes 5 ebenfalls gleich Null (der Punkt "MP" liegt auf dem Beckensegment 5). Die Geschwindigkeit in Richtung der Bewegung nimmt mit dem Abstand von der Abrollebene linear zu und erreicht ihr Maximum $v_{SG}$ im höchsten Punkt SG, der gleichzeitig der Umlenkrolle 1 und dem Schultergurt angehört. Dieser Punkt SG bewegt sich dabei mit der doppelten Geschwindigkeit $2*v_M$ des Mittelpunktes M der Umlenkrolle 1. Deshalb ist nach einer definierten Verschiebung des Mittelpunktes M um s[mm], der Punkt SG um einen Verschiebeweg von 2*s[mm] gewandert. Im Gegenteil dazu wurde der Punkt MP kumuliert nicht verschoben. Durch diese einfache kinematische Beziehung lässt sich eine Vorrichtung konstruieren, die das Beckensegment 5 trotz beweglicher Elemente nicht nachlässt (entspannt) und das Schultersegment 7 definiert entlastet. Wichtig ist hierbei die Unterbindung der Relativbewegung im Kontaktbereich.

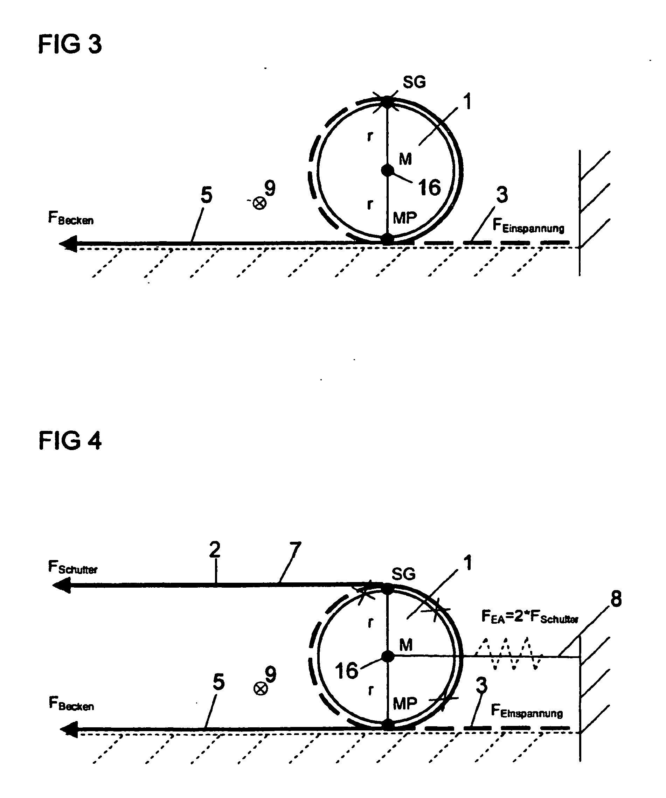

Allerdings wird vorliegend keine Abrollebene realisiert, sondern die technischen Prinzipien der Seiltheorie, insbesondere der einfachen Umschlingung einer Rolle durch ein Seil 2 ausgenutzt, wie anhand der Figuren 2 und 3 dargestellt werden soll.

Gemäß den Figuren 2 und 3 umschlingt das Seil 2 (bzw. der Sicherheitsgurt 2) vollständig die Umlenkrolle 1 und wird an einem Ende eingespannt. An dem anderen Ende wirkt weiter eine Kraft $F_{Becken}$. Unabhängig von der Größe dieser Kraft wird keine Bewegung der Umlenkrolle 1 induziert. Diese Kraft wirkt sich nur auf die Pressung zwischen der Umlenkrolle 1 und dem Seil 2 entlang der Umschlingung aus und wird vollständig durch die Einspannung abgeleitet. Damit folgt das Kräfteverhältnis:

$$F_{Becken} = F_{Einspannung}$$

Somit befindet sich das System in einem quasi-stabilen Zustand. Der Grund hierfür liegt in der Tatsache, dass die Umlenkrolle 1 jede beliebige Position entlang der Abrollebene annehmen kann, ohne den Kraftfluss zu verändern. Das System ist in sich verspannt und trotzdem beweglich. Wird das umschlingende Seil 2 entlang der Umschlingung getrennt und die neuen Seilenden mit der Umlenkrolle 1 fest verbunden, weist das System die gleichen Eigenschaften wie bei einem vollständigen Seil 2 auf.

Ausgehend von diesen Überlegungen ist es möglich, das System noch zu erweitern und zu modifizieren. Hierzu wird gemäß Figur 4 eine weitere Kraft $F_{Schulter}$ am oberen Punkt SG eingeführt, wie auch eine Ableitung dieser Kraft über den Punkt M durch ein Energieaufnahmeelement (Deformationselement 8). Die volle Umschlingung wird unterbrochen und durch einen Kraft- oder Formschluss des Seils 2 mit der Umlenkrolle 1 simuliert. Dadurch ist die unterbundene Relativbewegung zwischen Umlenkrolle 1 und Sicherheitsgurt 2 (Seil 2) wieder gewährleistet. Das System sieht dann folgendermaßen aus:

Bei allen möglichen Kräfteverteilungen ergibt sich ein Gleichgewicht. Die Summe der horizontalen Kräfte ist dabei gleich Null:

$$F_{Schulter} + F_{Becken} - F_{EA} - F_{Einspannung} = 0$$

Das Momentengleichgewicht um Punkt MP ergibt:

$$F_{Schulter}*2*r = F_{EA}*r$$

$$F_{Schulter} * 2 = F_{EA}$$

Somit ergibt sich:

$$F_{Einspannung} = F_{Becken} - F_{Schulter,}$$

d.h., ein definierter Kraftfluss, der unabhängig von der Position der Umlenkrolle 1 ist. Beim Einbau eines Energieaufnahmeelementes (Deformationselement 8), beispielsweise am Punkt M, welches mit der Einspannung fest verbunden wird, ist eine Begrenzung der Kraft $F_{Schulter}$ möglich. Solange die Kraft $2*F_{Schulter}$ die Verformungskraft $F_{EA}$ nicht überschreitet, stellt sich ein Gleichgewicht des Systems ein und die Kräfte fließen vollständig in die Einspannung ein. Bei Überschreitung der voreingestellten Verformungskraft $F_{EA}$, beispielsweise 6kN, stellt sich eine Kraft von $F_{Schulter}$=3kN am Punkt SG ein und die Umlenkrolle 1 setzt sich in Bewegung. Dadurch, dass der Kraftfluss zwischen $F_{Becken}$ und $F_{Einspannug,}$ wie bereits beschrieben, bestehen bleibt, kann die Beckensegmentkraft vollständig abgeleitet werden, die Beckensegmentbewegung unterbunden werden und die Schultergurtkraft durch die voreingestellte Kraft $F_{EA}$ begrenzt werden.

Um die definierte Bewegung der Umlenkrolle 1 festzulegen, werden vorzugsweise gemäß Figur 5 längs erstreckte Elemente 3 in Form von Flachbändern, vorzugsweise aus Blech, eingesetzt. Diese Blechelemente werden in geeigneter Weise mit der Schlosszunge 4 verbunden und verlaufen die Mantelfläche der Umlenkrolle 1 entlang, jeweils links und rechts neben dem umgelenkten Sicherheitsgurt 2. An den Enden gehen sie eine feste Verbindung mit der Umlenkrolle 1 ein. Auf diese Weise ist es möglich, einen definierten Abrollweg festzulegen, welcher nach dem Abrollvorgang nicht überschritten wird. In diesem Fall dienen die abgerollten längs erstreckten Elemente 3 als Verbindungsstege zwischen Umlenkrolle 1 und Schlosszunge 4. Die Energieaufnahme geschieht ggf. zusätzlich durch die Dehnung von Deformationselementen 8. Andere Energieaufnahmeprinzipien, welche umgesetzt werden können, sind das Ausziehen von Stiften, Umlenkung und Biegedeformation von Elementen, reiner Zug sowie das Abscheren von Laschen (siehe oben).

Bei der Umlenkrolle 1 gemäß Figur 6, die mittels eines Stiftes 8 mit der Schlosszunge 4 verbunden ist, bewirkt eine Abrollbewegung der Umlenkrolle 1 in Richtung der Schultergurtkraft um den Betrag x einen Auszug des Stiftes 8 um den gleichen Betrag x, da sich beide auf den Punkt M beziehen.

Wenn jedoch der Stift 8 an einer anderen Stelle angebracht wird, beispielsweise am Punkt SG (gestrichelte Linie), dann wandert der Punkt SG um den Betrag 2*x bei einer Abrollbewegung der Umlenkrolle 1 um x. Diese Geometriemerkmale übertragen sich auf die notwendigen Begrenzungskräfte, die der Stift 8 umsetzen muss. Im ersten Fall handelt es sich dabei um die doppelte Schultergurtkraft, im zweiten Fall um die einfache Schultergurtkraft, jedoch bei doppeltem Weg. Energetisch betrachtet ergeben beide Fälle die gleiche umgesetzte Deformationsenergie.

**Patentansprüche**

**1.** Schlossumlenkeinrichtung für ein Kraftfahrzeug, mit

- einer Schlosszunge (4) zum Einstecken in eine Schlossschnalle, und
- einem mit der Schlosszunge (4) verbundenen Umlenkkörper (1), der dazu ausgebildet ist, einen Sicherheitsgurt (2) in ein Schultersegment (7) und ein Beckensegment (5) zu unterteilen und derart umzulenken, dass die beiden Segmente (7, 5) in unterschiedlichen Richtungen vom Umlenkkörper (1) abgehen, wobei sich der Umlenkkörper (1) entlang einer Erstreckungsrichtung (9) längs erstreckt, und
- wobei der Umlenkkörper (1) einen Anlagebereich (20) zur Anlage des Sicherheitsgurtes (2) am Umlenkkörper (1) aufweist, und wobei der Sicherheitsgurt (2) um den Anlagebereich (20) herumgelegt ist,
- wobei der Anlagebereich (20) eine erste und eine zweite Anlagefläche (21, 22) aufweist, und wobei
- die erste Anlagefläche (21) entlang einer Normalen (31) der zweiten Anlagefläche (22) über die zweite Anlagefläche (22) hinaus steht, so dass der Sicherheitsgurt (2) bei einer am Schultersegment (7) angreifenden Kraft, die kleiner als eine vorbestimmbare Schwellenkraft ist, lediglich an der ersten Anlagefläche (21) anliegt, und dass der Sicherheitsgurt (2) bei einer am Schultersegment (7) angreifenden Kraft, die jene Schwellenkraft übersteigt, sich derart deformiert, dass er sich an die zweite Anlagefläche (22) anlegt,

**dadurch gekennzeichnet, dass**

zumindest ein vom Umlenkkörper (1) abragender Steg (50) vorgesehen ist, mit einer dem Umlenkkörper (1) abgewandten Oberfläche, die die erste Anlagefläche (21) bildet,
wobei der Steg (50) am Umlenkkörper (1) quer zur Erstreckungsrichtung (9) ringförmig umläuft,
oder
wobei der Steg (50) spiralförmig am Umlenkkörper (1) umläuft, so dass die erste Anlagefläche (21) erste Abschnitte (60) und zweite Abschnitte (61) aufweist, wobei die ersten Abschnitte (60) entlang derjenigen Richtung orientiert sind, entlang der das Schultersegment (7) vom Umlenkkörper (1) abgeht, und wobei die zweiten Abschnitte (61) entlang derjenigen Richtung orientiert sind, entlang der das Beckensegment (4) vom Umlenkkörper (1) abgeht.

2. Schlossumlenkeinrichtung nach Anspruch 1, **gekennzeichnet durch** eine Mehrzahl an Stegen (50), mit jeweils einer dem Umlenkkörper (1) abgewandten Oberfläche, wobei jene Oberflächen in ihrer Gesamtheit die erste Anlagefläche (21) bilden.

3. Schlossumlenkeinrichtung nach Anspruch 2, **dadurch gekennzeichnet, dass** sich zwischen zwei solchermaßen umlaufenden Stegen (50) jeweils die zweiten Anlageflächen (22) mit ihren höheren Reibungskoeffizienten erstrekken.

4. Schlossumkehreinrichtung nach einem der vorhergehenden Ansprüche, **dadurch gekennzeichnet, dass** die tieferliegende zweite Anlagefläche (22) in gleicher Weise spiralförmig am Umlenkkörper (1) umläuft.

5. Schlossumkehreinrichtung nach einem der vorhergehenden Ansprüche, **dadurch gekennzeichnet, dass** die Stege (50) einstückig an den Umlenkkörper (1) angeformt sind.

6. Schlossumlenkeinrichtung nach einem der vorhergehenden Ansprüche, **dadurch gekennzeichnet, dass** ein erhöhter Reibkoeffizient der zweiten Anlagefläche (22) des Umlenkkörpers (1) gegenüber der ersten Anlagefläche (21) durch eine Strukturierung der zweiten Anlagefläche (22) erreicht wird.

7. Schlossumlenkeinrichtung nach Anspruch 6, **dadurch gekennzeichnet, dass** die zweite Anlagefläche (22) eine Vielzahl von kleinen Erhebungen aufweist.

8. Schlossumlenkeinrichtung nach Anspruch 7, **dadurch gekennzeichnet, dass** die Erhebungen als zackenförmige Spermasen ausgebildet sind, die im Querschnitt zwei spitzwinklig aufeinander zulaufende Seiten aufweisen, wobei die beiden Seiten in Bezug auf eine Normale der zweiten Anlagefläche (22) insbesondere eine unterschiedliche Steigung aufweisen.

9. Schlossumlenkeinrichtung nach Anspruch 7 oder 8, **dadurch gekennzeichnet, dass** die Erhebungen richtungsabhängig ausgebildet sind, so dass einer Relativbewegung zwischen dem Umlenkkörper (1) und dem Sicherheitsgurt infolge einer über das Beckensegment eingeleiteten Kraft ein größerer Widerstand entgegengesetzt wird, als bei einer über das Schultersegment eingeleiteten Kraft.

10. Schlossumlenkeinrichtung nach einem der Ansprüche 7 bis 9, **dadurch gekennzeichnet, dass** die Erhebungen in Strukturen des Sicherheitsgurtes eingreifen und/oder diese hintergreifen, so dass zwischen dem Sicherheitsgurt und den Erhebungen der zweiten Anlagefläche (22) eine formschlüssige Verbindung hergestellt wird, wenn der Sicherheitsgurt mit einer vorbestimmbaren Schwellenkraft gegen die zweite Anlagefläche (22) drückt.

11. Schlossumlenkeinrichtung nach einem der Ansprüche 7 bis 10, **dadurch gekennzeichnet, dass** die Spitzen der Erhebungen abgeflacht sind.

**Claims**

1. A buckle deflection device for a motor vehicle, comprising

   - a buckle latch (4) for inserting into a buckle and
   - a deflecting body (1) connected to the buckle latch (4), which is configured to subdivide a safety belt (2) into a shoulder portion (7) and a pelvis portion (5) and to deflect said safety belt such that the two portions (7, 5) extend away from the deflecting body (1) in different directions, wherein the deflecting body (1) extends along a direction of extension (9), and

- wherein for bearing the safety belt (2) against the deflecting body (1) the deflecting body (1) has a bearing region (20) and wherein the safety belt (2) is positioned around the bearing region (20),
- wherein the bearing region (20) has a first and a second bearing surface (21, 22), and wherein
- the first bearing surface (21) projects beyond the second bearing surface (22), along a normal (31) of the second bearing surface (22), so that the safety belt (2), in case of a force acting on the shoulder portion (7) which is lower than a predeterminable threshold force, only bears against the first bearing surface (21), and in that the safety belt (2), in case of a force acting on the shoulder portion (7) which exceeds said threshold force, is deformed such that it bears against the second bearing surface (22),

**characterized in that**
at least one projection (50) projecting from the deflecting body (1) is provided with a surface opposite to the deflecting body (1) which forms the first bearing surface (21),
wherein the projection (50) surrounds the deflecting body (1) in an annular manner transversely to the direction of extension (9),
or
wherein the projection (50) surrounds the deflecting body (1) in a helical manner, so that the first bearing surface (21) comprises first sections (60) and second sections (61), wherein the first sections (60) are oriented along the direction along which the shoulder portion (7) extends away from the deflecting body (1) and wherein the second sections (61) are oriented along the direction along which the pelvis portion (4) extends away from the deflecting body (1).

2. The buckle deflection device as claimed in claim 1, **characterized by** a plurality of projections (50), with one respective surface opposite to the deflecting body (1), said surfaces forming in their entirety the first bearing surface (21).

3. The buckle deflection device as claimed in claim 2, **characterized in that** the second bearing surfaces (22) extend with their higher friction coefficients between two such surrounding projections (50), respectively.

4. The buckle deflection device as claimed in one of the preceding claims, **characterized in that** the lowerlying second bearing surface (22) surrounds the deflecting body (1) in the same helical manner.

5. The buckle deflection device as claimed in one of the preceding claims, **characterized in that** the projections (50) made in one piece are formed on the deflecting body (1).

6. The buckle deflection device as claimed in one of the preceding claims, **characterized in that** an increased friction coefficient of the second bearing surface (22) of the deflecting body (1) relative to the first bearing surface (21) is achieved by structuring the second bearing surface (22).

7. The buckle deflection device as claimed in claim 6, **characterized in that** the second bearing surface (22) has a plurality of small elevations.

8. The buckle deflection device as claimed in claim 7, **characterized in that** the elevations are configured as rooth-shaped latches which comprise in cross section two flanks extending in an acute angle to each other, wherein the two flanks have in particular different flank leads relative to a normal of the second bearing surface (22).

9. The buckle deflection device as claimed in claim 7 or 8, **characterized in that** the elevations are directionally configured, such that a resistance is opposed to a relative movement between the deflecting body (1) and the safety belt, as a result of a force introduced via the pelvis portion, the resistance being greater than with a force introduced via the shoulder portion.

10. The buckle deflection device as claimed in one of the claims 7 to 9, **characterized in that** the elevations engage in structures of the safety belt and/or engage behind said structures, so that a positive connection is established between the safety belt and the elevations of the second bearing surface (22), if the safety belt bears against the second bearing surface (22) with a predeterminable threshold force.

11. The buckle deflection device as claimed in one of the claims 7 to 10, **characterized in that** the tips of the elevations are flattened.

**Revendications**

1.  Dispositif de verrouillage à renvoi pour un véhicule automobile, comportant

    - une languette de verrouillage (4) à insérer dans une boucle de verrouillage, et
    - un corps de renvoi (1) relié à la languette de verrouillage (4), qui est conçu pour subdiviser une ceinture de sécurité (2) en un brin d'épaule (7) et un brin sous-abdominal (5), et la renvoyer de telle sorte que les deux brins (7, 5) partent du corps de renvoi (1) dans des directions différentes, le corps de renvoi (1) s'étendant le long d'une direction de développement (9), et
    - le corps de renvoi (1) comportant une zone d'appui (20) pour l'appui de la ceinture de sécurité (2) contre le corps de renvoi (1), et la ceinture de sécurité (2) étant placée autour de la zone d'appui (20),
    - la zone d'appui (20) comportant une première et une deuxième surfaces d'appui (21, 22), et
    - la première surface d'appui (21) dépassant de la deuxième surface d'appui (22) le long d'une normale (31) de la deuxième surface d'appui (22), de sorte que la ceinture de sécurité (2), en présence d'une force agissant sur le brin d'épaule (7) qui est inférieure à une force de seuil prédéfinissable, s'appuie uniquement contre la première surface d'appui (21), et que la ceinture de sécurité (2), en présence d'une force agissant sur le brin d'épaule (7) qui dépasse ladite force de seuil, se déforme de telle sorte qu'elle s'appuie contre la deuxième surface d'appui (22),

    **caractérisé en ce que**
    il est prévu au moins une saillie (50) partant en saillie du corps de renvoi (1) avec une surface opposée au corps de renvoi (1) qui forme la première surface d'appui (21),
    la saillie (50) s'étendant annulairement tout autour du corps de renvoi (1) transversalement à la direction de développement (9),
    ou
    la saillie (50) s'étendant en spirale tout autour du corps de renvoi (1), de sorte que la première surface d'appui (21) comporte des premières parties (60) et des deuxièmes parties (61), les premières parties (60) étant orientées le long de la direction le long de laquelle le brin d'épaule (7) part du corps de renvoi (1), et les deuxièmes parties (61) étant orientées le long de la direction le long de laquelle le brin sous-abdominal (4) part du corps de renvoi (1).

2.  Dispositif de verrouillage à renvoi selon la revendication 1, **caractérisé par** une pluralité de saillies (50) pourvues chacune d'une surface opposée au corps de renvoi (1), lesdites faces supérieures formant dans leur totalité la première surface d'appui (21).

3.  Dispositif de verrouillage à renvoi selon la revendication 2, **caractérisé en ce que** les deuxièmes surfaces d'appui (22), avec leurs coefficients de friction plus élevés, s'étendent respectivement entre deux saillies entourantes (50) de ce type.

4.  Dispositif de verrouillage à renvoi selon l'une quelconque des revendications précédentes, **caractérisé en ce que** la deuxième surface d'appui (22), située plus profond, s'étend de la même manière en spirale tout autour du corps de renvoi (1).

5.  Dispositif de verrouillage à renvoi selon l'une quelconque des revendications précédentes, **caractérisé en ce que** les saillies (50) sont formées d'un seul tenant sur le corps de renvoi (1).

6.  Dispositif de verrouillage à renvoi selon l'une quelconque des revendications précédentes, **caractérisé en ce qu'**on obtient un coefficient de friction plus élevé de la deuxième surface d'appui (22) du corps de renvoi (1) par rapport à la première surface d'appui (21) par une structuration de la deuxième surface d'appui (22).

7.  Dispositif de verrouillage à renvoi selon la revendication 6, **caractérisé en ce que** la deuxième surface d'appui (22) comporte une multiplicité de petits bossages.

8.  Dispositif de verrouillage à renvoi selon la revendication 7, **caractérisé en ce que** les bossages sont conçus sous forme d'ergots de blocage en forme de fourchons qui comportent, en coupe transversale, deux côtés convergeant sous un angle aigu, les deux côtés ayant notamment une pente différente par rapport à une normale de la deuxième surface d'appui (22).

9.  Dispositif de verrouillage à renvoi selon la revendication 7 ou 8, **caractérisé en ce que** les bossages sont conçus directionnels, de sorte qu'une plus grande résistance est opposée à un mouvement relatif entre le corps de renvoi (1) et la ceinture de sécurité suite à une force introduite via le brin sous-abdominal que lors d'une force introduite via le brin d'épaule.

10. Dispositif de verrouillage à renvoi selon l'une quelconque des revendications 7 à 9, **caractérisé en ce que** les bossages s'engagent dans des structures de la ceinture de sécurité et/ou engagent en prise arrière ces bossages, de sorte qu'une liaison par complémentarité de forme est réalisée entre la ceinture de sécurité et les bossages de la deuxième surface d'appui (22) lorsque la ceinture de sécurité s'appuie avec une force de seuil prédéfinissable contre la deuxième surface d'appui (22).

11. Dispositif de verrouillage à renvoi selon l'une quelconque des revendications 7 à 10, **caractérisé en ce que** les pointes des bossages sont aplaties.

**FIG 1**

**FIG 2**

## FIG 3

## FIG 4

**FIG 5**

**FIG 6**

**FIG 7**

$F_{Schulter}$

$F_{Becken}$

7  2

SG  1

M  8

16

MP  8a

3  8b

4

⊗ 9

5

**FIG 8**

12  13  9

7  1  20

11

5  3

16

3a  3

FIG 9

FIG 10

FIG 11

FIG 12

EP 2 277 747 B1

FIG 13

FIG 14

21

FIG 15

FIG 16

FIG 17

FIG 18

FIG 19

7   2        30 33 21
                      31
1
12
  ⊗9   16
5                33 30  31
                    21
                 30     31
                 22
                 20
                 31
                 21
                 33

FIG 20

7   2        30 21
                  31
                  33
1                 20
12                33
                  21
  ⊗9   16         30 31
5                 22
              33 21    31
                 30

FIG 21

FIG 22

## FIG 23

## FIG 24

## FIG 25

## FIG 26

FIG 27

FIG 28

FIG 29

FIG 30

FIG 31

FIG 32

FIG 33

FIG 34

**FIG 35**

**FIG 36**

**FIG 37**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3233797 C1